# EUROPEAN PATENT SPECIFICATION

(11) **EP 2 220 720 B1**
(45) Date of publication and mention of the grant of the patent: **04.05.2011**
(21) Application number: 08859756.2
(22) Date of filing: 17.11.2008
(51) Int. Cl.: H01M 12/06

(54) **A BATTERY UNIT**
BATTERIEEINHEIT
UNITÉ DE BATTERIE

(30) Priority: 13.12.2007 TR 200708649
(43) Date of publication of application: 25.08.2010
(73) Proprietor: Arçelik Anonim Sirketi, 34445 Istanbul (TR)
(72) Inventor: ÖRKÜN, Tevfik, 34524 Istanbul (TR); TÜRKAY, Bilgen Gülsen, 34524 Istanbul (TR); OSMAN, Osman, 34524 Istanbul (TR); ÖZYÜKSEL, Emre, 34524 Istanbul (TR); CANTÜRK, Ismail Cem, 34524 Istanbul (TR)
(86) International application number: PCT/IB2008/054794
(87) International publication number: WO 2009/074907

(56) References cited:
- WO-A-02/31906
- US-B1- 6 500 575

## Description

Field of the Invention

The present invention relates to a metal-air battery unit used in electronic devices.

Prior Art

Metal-air batteries are batteries which generate energy as a result of the chemical reactions taking place during contact of the metal therein with air. Zinc metal is commonly used in these batteries and the said batteries are called zinc-air batteries. The zinc-air battery that works with oxidation of zinc is suitable to be used in many devices (remote controls, torches, hearing instruments, etc.) since it can provide energy with high efficiency. However in case it continuously contacts with air it runs out in a short period of time and it is not rechargeable. For this reason, in order for the zinc-air battery to be used efficiently, there arose the need of cutting its contact with air when the device that it is connected to is not operational and various air management methods and apparatuses for controlling air intake - output were developed for this kind of batteries. In the state of the art, methods like structures with diaphragms, pumps, mechanical switches and fans are used for air management in zinc air batteries.

The International patent document No. WO2006081030, in the state of the art, discloses an air management apparatus used in zinc-air batteries. Contact of the battery, which is disposed in a housing, with air is controlled by a motor located at the cover of the housing, and by the operation of the impeller driven by the motor. The signals required for the operation of the motor are provided by an electronic generator circuit or a voltage controlled oscillator. In the said document, there is no such application like storing load on another element (e.g. capacitor) during operation of the batteries and using of this load later in the operation of the apparatus.

Another state of the art application USA patent document No. US2004038087 discloses a battery apparatus in which load leveling is realized during its operation by using a capacitor. The air inlets and micro fans provided on the two opposite caps of the chamber in which the battery is located provide the air flow that will operate the air battery. The load to be used by the capacitor is generated by a second battery.

As it is seen from the above given examples, the apparatuses which provide air management in the state of the art applications including air management with fan for batteries, use a plurality of control elements (motor, circuits driving the motor, oscillator, a plurality of fans, etc.) and realize control of air management in a single direction. The fact that the air management structures are complex and multi part poses a difficulty in terms of production, increases product cost and restricts areas of use. Additionally, control of air flow only in a single direction impedes realization of a more effective and efficient air management and causes the life of the battery not to be sufficiently long.

Summary of the Invention

The objective of the present invention is to realize a battery unit which is used in electronic devices and which is ensured to operate more efficiently and to have a longer life.

Another objective of the invention is to realize a battery unit which can effectively operate without using an external power supply.

A further objective of the invention is to realize a low cost battery unit having a simple design.

The battery unit realized to fulfill the objective of the present invention and defined in Claim 1 and in its dependent claims, comprises a capacitor which stores load by being charged by the energy generated during operation of the metal-air battery and which operates the fan with the energy stored for the next use when the device to which the battery is connected is started. Thus the battery unit can perform all its functions without requiring an additional power supply other than the battery to which air management is applied.

Additionally, the fan provided at the air inlet-outlet of the battery chamber in the inventive battery unit is reverse polarized when the on or off keys of the electronic device to which the battery is connected are depressed. This way, the rotation direction of the fan when the electronic device is started to be used and when it is no more used are opposite to each other. The fan movement formed when the device is started enables air to fill into the chamber and activates the battery, whereas when the device is stopped (switched to standby mode) the fan rotates in the opposite direction and enables the air within the chamber to be discharged. Thus the air flow between the battery and the medium is controlled in both directions thereby contact of the battery with air is controlled more effectively.

Detailed Description of the Invention

The battery unit realized to fulfill the objective of the present invention is illustrated in the accompanying figure in which,

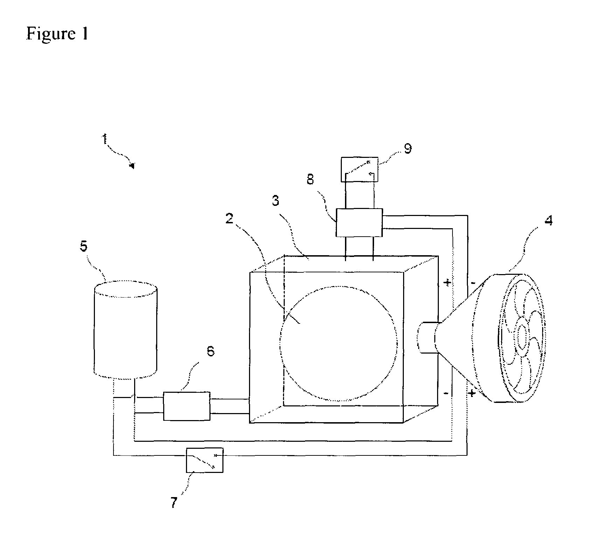

Figure 1 is the schematic view of the battery unit.

The components shown in the figures are numbered as follows:

1. Battery unit

2. Metal-air cell

3. Chamber

4. Fan

5. Capacitor

6. Power Supply circuit

7. Power on switch

8. Discharge circuit

9. Power off switch

The inventive battery unit (1) is used in devices (for example in remote controls) which can be operated with batteries. The battery unit (1) comprises at least one metal-air cell (2), a chamber (3) into which the metal-air cell (2) is disposed and which comprises the air required for the operation of the metal-air cell (2); a fan (4) which enables the chamber (3) to be filled with air and the air therein to be discharged and which is located at an opening on the chamber (3) or at the edge of an air channel opening to the chamber (3); a capacitor (5) which is charged by being supplied with voltage provided by the metal-air cell (2) during operation of the metal-air cell (2) and which operates the fan (4) when the metal-air cell (2) is activated; a power supply circuit (6) which enables the voltage between the poles of the metal-air cell (2) to be transmitted to the capacitor (5), a power on switch (7) which upon being closed enables operation of the fan (4) by completing the line by which the electrical load stored in the capacitor (5) is transmitted to the fan (4); a power off switch (9) which upon being opened and closed triggers the discharge circuit (8); and a discharge circuit (8) which, upon being triggered by opening and closing of the power off switch (9), enables the voltage between the poles of the metal-air cell (2) to be supplied to the fan (4) ensuring that the fan (4) operates in the opposite direction and which enables the fan (4) to operate until the air in the chamber (3) is discharged.

A full capacitor (5) is used in production of the device (remote control) in which the battery unit (1) will be used, thus the power to be used at the initial startup of the battery unit (1) is supplied from the capacitor (5). Upon depressing the power on (ON) key of the device (for example remote control) where the battery unit (1) is used, the power on switch (7) closes and by means of prolonged depression of the said key by the user for a certain period of time, the electrical load on the capacitor (5) is transferred to the fan (4). Since within this period the power on switch (7) is in closed position, electrical connection is provided between the capacitor (5) and the fan (4) and the fan rotates towards a certain direction to enable the chamber (3) to be filled with air. Rotation of the fan (4) to fill the chamber (3) with air terminates when the user releases the power on key or when the capacitor (5) is fully discharged.

As a result of the rotation movement the fan (4) performs for a certain period of time, the metal-air cell (2) provided in the chamber (3) is activated upon chemically interacting with the air filling the chamber (3) and starts to generate energy.

Thanks to the metal-air cell's (2) capacity for generating energy for a long period of time with small amount of air, energy that will last for a long time for the remote control is generated with the air filled in to the chamber (3). The energy generated by the metal-air cell (2) produces voltage between the poles of the metal-air cell (2). With this voltage, energy is supplied to the device in which the battery unit (1) is used (not shown in the figure). The voltage generated by the metal-air cell (2) is additionally supplied to the power supply circuit (6) and the discharge circuit (8).

The power supply circuit (6) enables the voltage between the poles of the metal-air cell (2) during operation thereof to be supplied to the capacitor (5). Thus, the energy to be used to operate the fan (4) for filling the chamber (3) with air in the next startup of the device is stored in the capacitor (5).

The discharge circuit (8) which is another element connected to the poles of the metal-air cell (2) is triggered upon closing of the power off switch (9) of the device and stops the operation of the metal-air cell (2). Function of the power off switch (9) is performed by the standby key on the remote control. When the user depresses the power off switch (9) on the device for a certain period of time, the discharge circuit (8) is triggered and the voltage between the poles of the metal-air cell (2) is transmitted to the fan (4). The electrical connection between the poles of the metal-air cell (2) and the fan (4) provided via the discharge circuit (8) is reverse polarized relative to the connection between the capacitor (5) and the fan (4). Thus, if the value of the voltage supplied from the capacitor (5) to the fan (4) is V, the value of the voltage supplied to the fan (4) via the discharge circuit (8) is -V. Hence when the power off key is depressed, the fan (4) rotates towards the direction opposite to the direction it rotates during switching on (ON) operation and enables the air within the chamber (3) to be discharged. Even if the user releases the power off switch (9) before completion of the discharge of the air in the chamber (3); by means of the discharge circuit (8), the fan (4) continues to operate until air discharge is completed. Since contact of the metal-air cell (2) with air is lost as a result of discharge of the air in the chamber (3), the chemical reactions originating from the interaction of the metal-air cell (2) with air and thus energy generation of the metal-air cell (2) are terminated. As a result of that, the voltage between the poles of the metal-air cell (2) decreases to zero whereby the fan (4) stops. Owing to discharge of the air within the chamber (3), the metal-air cell (2) is impeded from generating energy at times when the device is not used and thus life of the device is extended.

Within the scope of this basic concept, it is possible to develop a wide variety of embodiments of the battery unit (1). The invention is essentially according to the claims and it can not be limited to the examples explained herein.

## Claims

1. A battery unit (1) which is used in devices which can be operated with batteries; comprising at least one metal-air cell (2), a chamber (3) into which the metal-air cell (2) is disposed and which comprises the air required for the operation of the battery (2); a fan (4) which is located at an opening on the chamber (3) or at the edge of an air channel opening to the chamber (3); at least one capacitor (5); a power supply circuit (6) which enables the voltage between the poles of the metal-air cell (2) to be supplied to the capacitor (5), a power on switch (7) which, upon being closed, enables operation of the fan (4) by completing the line by which the electrical load stored in the capacitor (5) is transmitted to the fan (4); a power off switch (9) which upon being opened and closed triggers the discharge circuit (8); and a discharge circuit (8) which, upon being triggered by opening and closing of the power off switch (9), enables the voltage between the poles of the metal-air cell (2) to be supplied to the fan (4) ensuring that the fan (4) operates in the opposite direction and which enables the fan (4) to operate until the air in the chamber (3) is discharged; wherein
- the fan (4) enables the chamber (3) to be filled with air and the air therein to be discharged, and rotates upon being supplied with the energy stored on the capacitor (5) by depression of the power on (ON) key of the device in which the unit is used, and enables the chamber (3) to be filled with air and;
- the capacitor (5) is charged by being supplied with voltage provided by the metal-air cell (2) during operation of the metal-air cell (2) and operates the fan (4) when the metal-air cell (2) is activated.

2. A battery unit (1) according to Claim 1 **characterized by** a power on switch (7) which remains closed as long as the power on (ON) key of the device in which it is used is depressed, and which, in closed position, enables the electrical load on the capacitor (5) to be supplied to the fan (4).

3. A battery unit (1) according to any of the preceding claims **characterized by** a power off switch (9) which remains closed as long as the standby key of the device used is depressed, and which triggers the discharge circuit (8) upon opening and closing, whereby enables the voltage between the poles of the metal-air cell (2) to be supplied to the fan (4) in reverse polarization.

4. A battery unit (1) according to any of the preceding claims **characterized by** a fan (4) which rotates in the opposite direction upon being supplied with the voltage between the poles of the metal-air cell (2) in reverse polarization by depression of the standby key of the device in which the unit is used, and which enables the air in the chamber (3) to be discharged.

## Patentansprüche

1. Batterieeinheit (1), die mit Vorrichtungen benutzt wird, die mit Batterien betreibbar sind; umfassend wenigstens eine Metall-Luft-Zelle (2), eine Kammer (3), in der die Metall-Luft-Zelle (2) angeordnet ist und die die Luft umfasst, die für den Betrieb der Batterie (2) benötigt wird; ein Gebläse (4), das an einer Öffnung an der Kammer (3) oder an der Kante eines Luftkanals, der sich in die Kammer (3) hinein öffnet, angeordnet ist; wenigstens einen Kondensator (5); einen Spannungsversorgungskreis (6), der es ermöglicht, dass die Spannung zwischen den Polen der Metall-Luft-Zelle (2) dem Kondensator (5) zugeführt wird, einen Ein-Schalter (7), der, wenn er geschlossen wird, den Betrieb des Gebläses (4) ermöglicht, indem er die Leitung vervollständigt, über die die elektrische Ladung, die im Kondensator (5) gespeichert ist, an das Gebläse (4) übertragen wird; einen Aus-Schalter (9), der, wenn er geöffnet und geschlossen wird, den Ablasskreis (8) auslöst; und einen Ablasskreis (8), der, wenn er durch das Öffnen und Schließen des Aus-Schalters (9) ausgelöst wird, ermöglicht, dass die Spannung zwischen den Polen der Metall-Luft-Zelle (2) dem Gebläse (4) zugeführt wird, und so dafür sorgt, dass das Gebläse (4) in der entgegengesetzten Richtung arbeitet, und der es dem Gebläse (4) ermöglicht, zu arbeiten, bis die Luft in der Kammer (3) abgelassen wurde; wobei
- das Gebläse (4) es der Kammer (3) ermöglicht, mit Luft gefüllt zu werden, und der Luft darin, abgelassen zu werden, und sich dreht, wenn es mit der Energie, die im Kondensator (5) gespeichert ist, versorgt wird, indem die Einschalt-(ON)-Taste der Vorrichtung, in der es benutzt wird, gedrückt wird, was es der Kammer (3) ermöglicht, mit Luft gefüllt zu werden; und
- der Kondensator (5) geladen wird, indem ihm während des Betriebs der Metall-Luft-Zelle (2) die Spannung von der Metall-Luft-Zelle (2) zugeführt wird, und das Gebläse (4) betreibt, wenn die Metall-Luft-Zelle (2) aktiviert ist.

2. Batterieeinheit (1) nach Anspruch 1, **gekennzeichnet durch** einen Ein-Schalter (7), der geschlossen bleibt, solange die Einschalt-(ON)-Taste der Vorrichtung, in der er benutzt wird, gedrückt wird, und der es in der geschlossenen Position ermöglicht, dass die elektrische Ladung des Kondensators (5) dem Gebläse (4) zugeführt wird.

3. Batterieeinheit (1) nach einem der vorangehenden Ansprüche, **gekennzeichnet durch** einen Aus-Schalter (9), der geschlossen bleibt, solange die Bereitschaftstaste der Vorrichtung, in der er benutzt wird, gedrückt wird, und der beim Öffnen und Schließen den Ablasskreis (8) auslöst, wodurch er ermöglicht, dass die Spannung zwischen den Polen der Metall-Luft-Zelle (2) in umgekehrter Polarisierung dem Gebläse (4) zugeführt wird.

4. Batterieeinheit (1) nach einem der vorangehenden Ansprüche, **gekennzeichnet durch** ein Gebläse (4), das sich in entgegengesetzter Richtung dreht, wenn es **durch** Drücken der Bereitschaftstaste der Vorrichtung, in der es benutzt wird, mit der Spannung zwischen den Polen der Metall-Luft-Zelle (2) versorgt wird, und das es ermöglicht, dass die Luft in der Kammer (3) abgelassen wird.

## Revendications

1. Une unité de batterie (1) qui est utilisée dans des appareils qui peuvent être opérés avec batteries ; comprenant au moins un élément métal-air (2), une chambre (3) dans laquelle l'élément métal-air (2) est disposé et qui comprend l'air nécessaire pour l'opération de la batterie (2) ; un ventilateur (4) qui est situé à une ouverture sur la chambre (3) ou au bord d'un canal d'air s'ouvrant à la chambre (3) ; au moins un condensateur (5) ; un circuit d'alimentation (6) qui permet la tension entre les pôles de l'élément métal-air (2) d'être alimentée au condensateur (5) ; un interrupteur de marche (7) qui, après avoir été fermé, permet le fonctionnement du ventilateur (4) en complétant la ligne à travers laquelle la charge électrique stockée dans le condensateur (5) est transmis au ventilateur (4), un interrupteur d'arrêt (9) qui, après être ouvert et fermé, déclenche le circuit de décharge (8), et un circuit de décharge (8), qui, après avoir été déclenché par l'ouverture et la fermeture de l'interrupteur d'arrêt (9), perme à la tension entre les pôles de l'élément métal-air (2) d'être alimentée au ventilateur (4) en assurant que le ventilateur (4) fonctionne dans le sens opposite et qui permet au ventilateur (4) de fonctionner jusqu'à ce que l'air dans la chambre (3) est évacué, dans laquelle
- le ventilateur (4) permet à la chambre (3) d'être rempli de l'air et à l'air là-dedans d'être évacué, et qui tourne après avoir été alimenté avec la puissance stockée dans le condensateur (5) par l'appui du bouton d'alimentation (ON) de l'appareil où il est utilisé et permet à la chambre (3) d'être rempli de l'air et ;
- le condensateur (5) est chargé en étant alimenté par la tension alimentée par l'élément métal-air (2) pendant le fonctionnement de l'élément métal-air (2) et opère le ventilateur (4) lorsque l'élément métal-air (2) est activé.

2. Une unité de batterie (1) selon la Revendication 1, **caractérisée par** un interrupteur de marche (7) qui reste fermé tant que le bouton d'alimentation (ON) de l'appareil où il est utilisé est appuyé, et qui, en position fermée, permet la charge électrique sur le condensateur (5) d'être alimentée au ventilateur (4).

3. Une unité de batterie (1) selon l'une quelconque des revendications précédents, **caractérisée par** un interrupteur d'arrêt (9) qui reste fermé tant que le bouton de veille de l'appareil où il est utilisé est appuyé, et qui déclenche le circuit de décharge (8) après avoir été ouvert et fermé, donc permet la tension entre les pôles de l'élément métal-air (2) d'être alimentée au ventilateur (4) en polarisation inverse.

4. Une unité de batterie (1) selon l'une quelconque des revendications précédentes, **caractérisée par** un ventilateur (4) qui tourne dans le sens inverse après avoir été alimenté par la tension entre les pôles de l'élément métal-air (2) en polarisation inverse par l'appui du bouton de veille de l'appareil où l'unité est utilisée, et qui permet à l'air dans la chambre (3) d'être évacué.
